# EUROPÄISCHE PATENTSCHRIFT

(11) **EP 0 363 901 B1**
(45) Veröffentlichungstag und Bekanntmachung des Hinweises auf die Patenterteilung: **05.05.1993**
(21) Anmeldenummer: 89118806.2
(22) Anmeldetag: 10.10.1989
(51) Int. Cl.: F24D 3/12

(54) **Grosse Betonplatte mit einer Flächenheizung.**
Concrete slab of large size with surface heating.
Plaque en béton de grande dimension avec chauffage par surfaces.

(30) Priorität: 11.10.1988 DE 3834472
(43) Veröffentlichungstag der Anmeldung: 18.04.1990
(73) Patentinhaber: STRABAG BAU-AG, D-50679 Köln (DE)
(72) Erfinder:
(74) Vertreter: Hennicke, Albrecht, Dipl.-Ing.

(56) Entgegenhaltungen:
- CH-A- 552 179
- FR-A- 886 546
- US-A- 2 570 226
- US-A- 3 568 924

## Beschreibung

Die Erfindung betrifft eine große Betonplatte mit einer Flächenheizung mit im Inneren der Platte angeordneten Heizrohren, die von einem Heizmedium durchströmt werden und zu einem ersten Heizrohrregister und einem zweiten Heizrohrregister mit mehreren Heizrohren zusammengefaßt sind, die an ihrem einen Ende an ein Vorlaufverteilerrohr und an ihrem anderen Ende an ein Rücklaufsammelrohr angeschlossen sind und wobei die einzelnen Heizrohre der beiden Register miteinander abwechselnd in der gleichen Fläche nebeneinanderliegen und die Heizrohre des ersten Registers alle in einer Richtung und die Heizrohre des zweiten Registers alle in der entgegengesetzten Richtung durchströmt werden.

Flächenheizungen, deren von Warmwasser oder Dampf durchströmte Heizrohre in der Fußboden- oder Deckenplatte eines Gebäudes angeordnet sind, dienen zur Beheizung von Wohn- und Geschäftshäusern und beanspruchen keinen zusätzlichen Raum. Die Heizrohre werden mit einer Ummantelung aus Schaumkunststoff oder einem anderen elastischen Material versehen, welches einen wasserdichten Überzug erhält, damit die beim Herstellen der Betonplatte in den Frischbeton eingebetteten Rohre selbst nicht mit dem Beton in Berührung kommen und sich bei Erwärmung und Abkühlung ausdehnen und zusammenziehen können.

Um den Einbau zu erleichtern und möglichst wenig Anschlüsse an die Vorlauf- und Rücklaufleitung zu haben, werden die Heizrohre als Heizregister ausgebildet, in denen jeweils ein an Vorlaufleitung und Rücklaufleitung angeschlossenes Heizrohr als Heizschlange mäanderförmig so verläuft, daß die Windungen des Heizrohres ineinanderliegen.

Es ist eine Flächenheizung der eingangs näher erläuterten Art bekannt (CH-A 552 179), mit der die Beheizung großer Betonplatten möglich ist, wie sie beispielsweise als Fußbodenplatten für Flugzeugwartungshallen oder Konzertsäle oder für Brückenfahrbahnen benötigt werden. Da die Heizrohre der beiden Register nebeneinanderliegen, aber in entgegengesetzter Richtung durchströmt werden, wird eine gleichmäßige Erwärmung der gesamten Platte erreicht. Da jedoch die mäanderförmigen Heizrohre ein im wesentlichen flächenhaftes, ebenes Register bilden, müssen sie in der Betonplatte so angeordnet werden, daß sie mit einer in dieser angeordneten Bewehrung nicht kollidieren. Sie liegen deshalb in einer anderen Ebene als die Bewehrung und in geringem Abstand von der Oberfläche der Betonplatte, in der sie dann durch Wärmedehnungen ein zusätzliches Moment erzeugen.

Bei einer anderen bekannten Flächenheizung (FR-A-886 546) sind mäanderförmig gestaltete Heizrohre von zwei Rohrregistern, die gegenläufig durchströmt werden, ineinandergeschachtelt, wobei jeweils zwei aufeinanderfolgende Stränge eines Registers nebeneinander und zwischen zwei Strängen des anderen Registers liegen. Die Wärmeverteilung ist hier über die Fläche weniger gut aber noch ausreichend. Da auch hier die Heizrohre in einer anderen Ebene angeordnet werden müssen als eine Bewehrung, erzeugt die Erwärmung im Inneren der Betonplatte zusätzliche Spannungen.

Das gleiche Problem tritt auch bei einer anderen bekannten Flächenheizung für eine Fahrbahnplatte auf, die zum Abschmelzen eines Schneebelages dient (US-A-3 568 924). Bei dieser bekannten Heizung sind mehrere Rohrregister in unregelmäßiger Anordnung ineinander verschachtelt, was zu einer ungleichmäßigen Erwärmung der Fahrbahnplatte und damit auch zu ungleichmäßigen Spannungen führt.

Aufgabe der Erfindung ist es, eine Flächenheizung der eingangs näher erläuterten Art in einer großen Betonplatte so anzuordnen, daß die Betonplatte nicht nur in ihrer ganzen Fläche gleichmäßig erwärmt wird, sondern daß auch in Bezug auf die Bewehrung durch die Erwärmung keine zusätzlichen Spannungen auftreten.

Diese Aufgabe wird mit der Erfindung dadurch gelöst, daß die Heizrohre in der gleichen, vorzugsweise ebenen Fläche angeordnet sind, wie eine Hauptbewehrung der Betonplatte und daß die Heizrohre parallel zu den Bewehrungseinlagen verlaufen.

Diese Ausgestaltung hat den Vorteil, daß die bei Erwärmung der Heizrohre in der Betonplatte erzeugten Zugkräfte in der gleichen Fläche des Verbundquerschnittes auftreten, in der sich auch die Bewehrung befindet. Durch die Erwärmung wird deshalb in Bezug auf die Bewehrung kein zusätzliches Moment erzeugt, und es ist möglich, die Platte zentrisch in einer oder in zwei Richtungen vorzuspannen. Hierdurch können auch sehr große Betonplatten mit Abmessungen von etwa 80 X 150 m ohne Dehnungsfugen hergestellt werden, wie dies beispielsweise bei den Bodenplatten von Flugzeugwartehallen gefordert wird.

Bei Anordnung einer Längs- und Querbewehrung ist es möglich, zwei Lagen von ersten und zweiten Heizrohrregistern vorzusehen, von denen die erste Lage in der Ebene der Längsbewehrung und von denen die zweite Lage in der Ebene der Querbewehrung angeordnet ist.

Die Vorlaufverteilerrohre und die Rücklaufsammelrohre der Heizrohrregister sind zweckmäßig unterhalb oder oberhalb der vorzugsweise ebenen Fläche angeordnet, in der sich die Heizrohre befinden. Für diese quer verlaufenden Rohre können dann in der Platte geeignete Aussparungen hergestellt werden und es ist möglich, die zwischen den Heizrohren liegende Bewehrung ohne Kollision mit den Vorlaufverteilerrohren und den Rücklaufsammelrohren durch die ganze Platte in einer Ebene durchzuführen. Wo der nötige Raum hierfür zur Verfügung steht, ist es zweckmäßig, die Vorlaufverteilerrohre und die Rücklaufsammelrohre unterhalb der Betonplatte in Versorgungskanälen anzuordnen. In diesem Falle gibt es durch diese quer verlaufenden Rohre weder eine Behinderung für die Bewehrung noch Zwängungen. Diese sind jedoch ohnehin gering, da nur wenige solcher quer verlaufenden Vorlaufverteilerrohre und Rücklaufsammelrohre in der ganzen Platte vorhanden sind.

Um die Heizrohrregister in einer bewehrten Platte wirtschaftlich einzubauen, ist es zweckmäßig, die Heizrohrregister und die in der gleichen Ebene wie diese angeordnete Hauptbewehrung auf einer beiden gemeinsamen Stützkonstruktion im Frischbeton der Betonplatte abzustützen.

Weitere Merkmale und Vorteile der Erfindung ergeben sich aus der nachfolgenden Beschreibung und den Zeichnungen, in denen bevorzugte Ausführungsformen der Erfindung an Beispielen näher erläutert sind. Es zeigt:
- Fig. 1: eine große Betonplatte mit einer Flächenheizung nach der Erfindung im Grundriß,
- Fig. 2: ein Teil eines der Plattenfelder der großen Betonplatte nach Fig. 1 in einer schematischen Draufsicht in vergrößertem Maßstab,
- Fig. 3: einen senkrechten Teilquerschnitt durch die Betonplatte nach Fig. 2, bei der die Vorlaufverteilerrohre und Rücklaufsammelrohre von zwei benachbarten Plattenfeldern in einem Versorgungskanal angeordnet sind, in stark vergrößertem Maßstab,
- Fig. 4: den Gegenstand der Fig. 2 in einem vertikalen Teilquerschnitt nach Linie IV-IV,
- Fig. 5: eine andere Ausführungsform der Erfindung in einer der Fig. 4 analogen Darstellung und
- Fig. 6: eine Einzelheit der Fig. 4 in stark vergrößertem Maßstab.

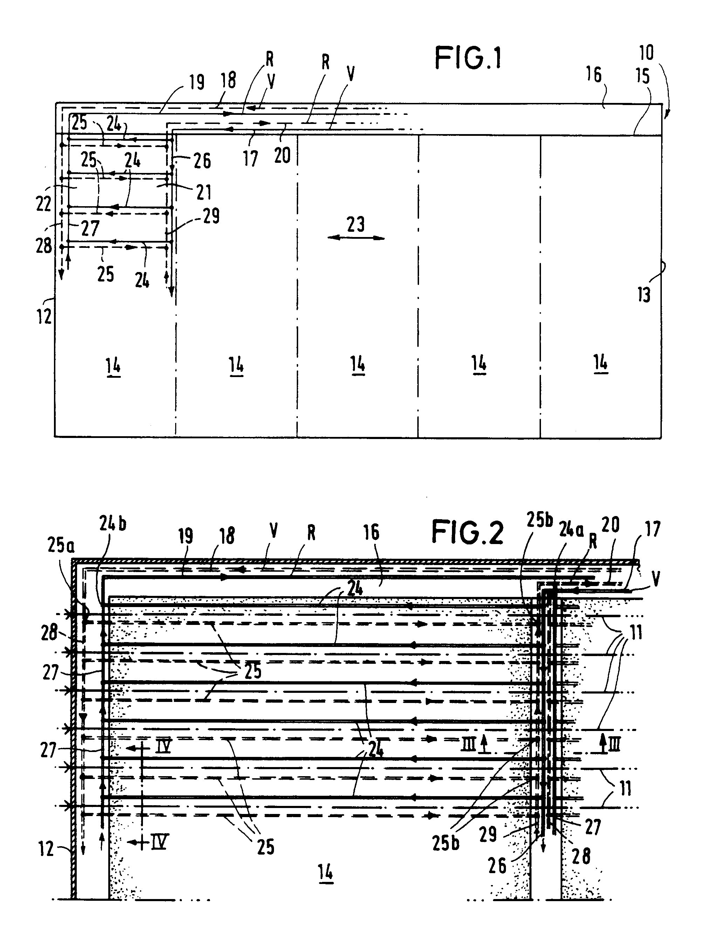

In den Zeichnungen ist mit 10 eine große Betonplatte bezeichnet, die eine Länge von 150 m und eine Breite von 80 m hat und als Bodenplatte für eine Flugzeugwartungshalle dient. Die Betonplatte 10 ist in Längsrichtung mit Spanngliedern 11 (Fig. 2) zentrisch vorgespannt, welche die Hauptbewehrung der Betonplatte 10 darstellen und an den Stirnseiten 12 und 13 der Platte verankert sind. Die Betonplatte 10 ist bei dem dargestellten Ausführungsbeispiel in fünf Plattenfelder 14 aufgeteilt, von denen eines in Fig. 2 teilweise in vergrößertem Maßstab dargestellt ist. An einer Längsseite 15 der Platte 10 befindet sich ein Versorgungsgang 16, der unterhalb der Platte 10 angeordnet ist und in dem neben anderen Versorgungsleitungen auch zwei Vorlaufleitungen 17 und 18 und zwei Rücklaufleitungen 19 und 20 für ein flüssiges oder gasförmiges Heizmedium, beispielsweise Warmwasser, angeordnet sind, die an einen hier nicht näher dargestellten Heizkessel angeschlossen sind.

In jedem Plattenfeld 14 ist ein erstes Heizrohrregister 21 und ein zweites Heizrohrregister 22 vorgesehen, von denen das erste Heizrohrregister 21 in den Fig. 1 und 2 nur schematisch in ausgezogenen Linien und von denen das zweite Heizrohrregister 22 in strichierten Linien dargestellt ist.

Jedes der beiden Heizrohrregister 21 und 22 besteht aus mehreren geradlinig und in der gleichen Richtung, nämlich in Längsrichtung 23 der Platte 10 verlaufenden Heizrohren 24 bzw. 25. Die Heizrohre 24 des ersten Heizrohrregisters 21, von denen in Fig. 1 nicht alle dargestellt sind, sind mit ihrem einen Einlaufende 24a an ein Vorlaufverteilerrohr 26 und mit ihrem anderen Auslaufende 24b an ein Rücklaufsammelrohr 27 angeschlossen. In gleicher Weise sind auch die Heizrohre 25 des zweiten Heizrohrregisters 22 mit ihrem Einlaufende 25a an ein Vorlaufverteilerrohr 28 und mit ihrem Auslaufende 25b an ein Rücklaufsammelrohr 29 angeschlossen. Die Vorlaufverteilerrohre 26 und 28 verlaufen quer zu den Heizrohren 24 und 25 und sind im Versorgungsgang 16 an die Vorlaufleitungen 17. bzw. 18 angeschlossen, während die Rücklaufsammelrohre 27 und 29, die auch quer zu den Heizrohren 24 und 25 verlaufen, im Versorgungsgang 16 an die Rücklaufrohre 19 bzw. 20 angeschlossen sind. Die Vorlaufverteilerrohre 26 und 28 und die Rücklaufsammelrohre 27 und 29 befinden sich unterhalb der ebenen Fläche 30, in der sich die Heizrohre 24 und 25 der beiden Heizrohrregister 21 und 22 befinden, und sind bei dem in den Fig. 1 bis 4 dargestellten Ausführungsbeispiel in Versorgungskanälen 31 untergebracht, die sich unterhalb der Betonplatte 10 befinden. Hierbei sind die Heizrohre 24 und 25 durch Rohrkrümmer 32 und Verbindungsstücke 33, die nach unten aus der Betonplatte 10 heraus in den Versorgungskanal 31 führen, mit den Vorlaufverteilerrohren 26 und 28 bzw. den Rücklaufsammelrohren 27 und 29 verbunden.

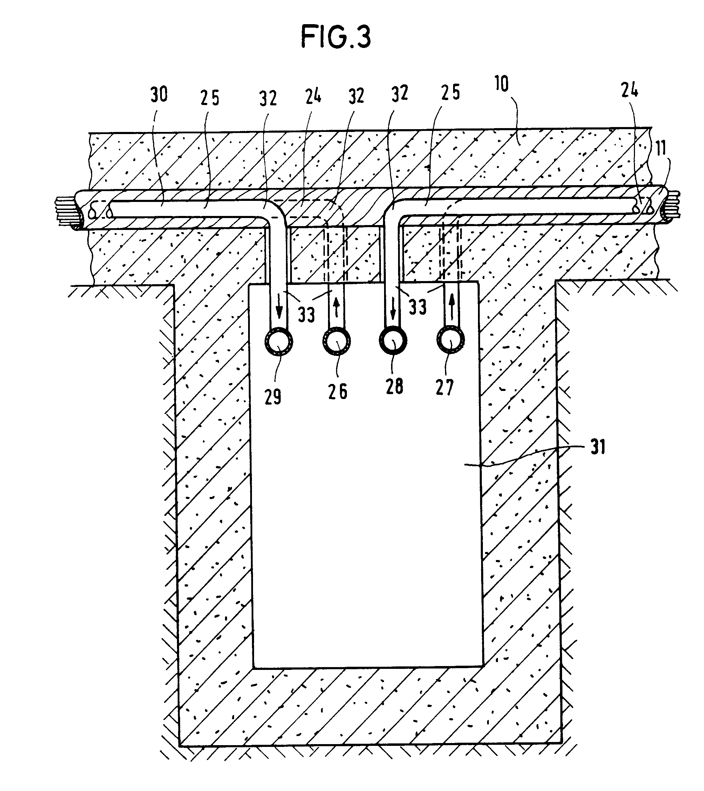

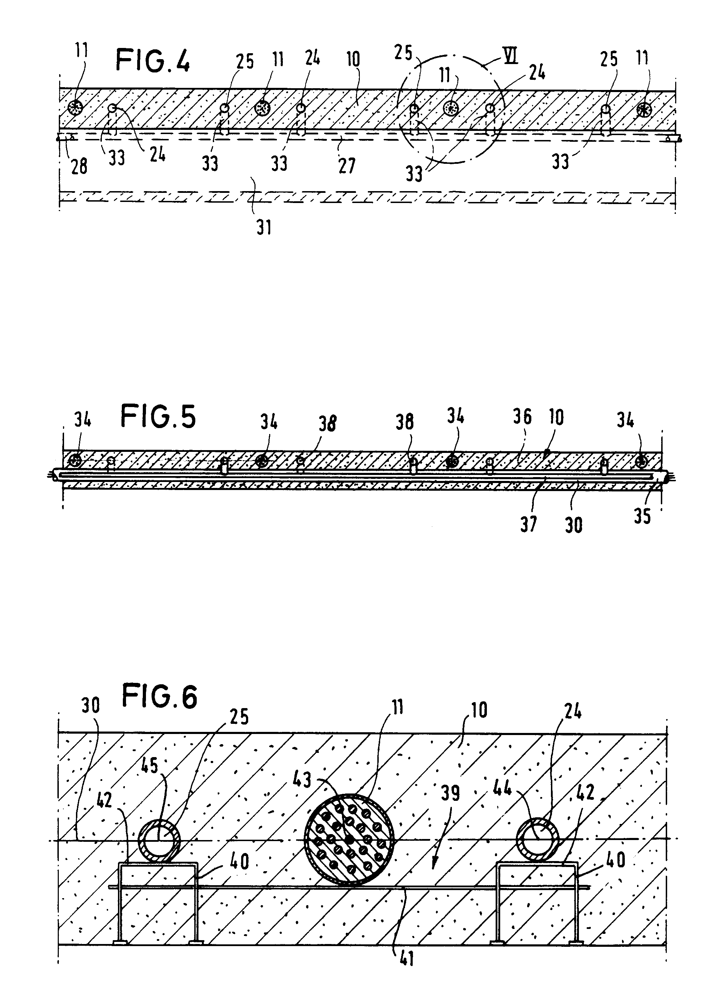

Man erkennt aus den Fig. 1 und 2, daß die Heizrohre 24 des ersten Heizrohrregisters 21 zwischen den Heizrohren 25 des zweiten Heizrohrregisters 22 angeordnet sind und daß die Heizrohre 24 des ersten Heizrohrregisters 21 in der einen Richtung, in den Fig. 1 und 2 von rechts nach links, und die Heizrohre 25 des zweiten Heizrohrregisters 22 in der entgegengesetzten Richtung, also bei der Darstellung nach den Fig. 1 und 2 von links nach rechts, vom Heizmedium durchströmt werden. Man erkennt ferner aus den Fig. 3 und 4, daß die Heizrohre 24 und 25 der beiden Heizrohrregister 21 und 22 in der gleichen Ebene 30 angeordnet sind wie die von den Spanngliedern 11 gebildete Hauptbewehrung der Betonplatte 10; die Spannglieder 11 liegen also zwischen den Heizrohren 24 und 25 und laufen in gleicher Richtung 23 wie diese.

Bei dem in Fig. 5 dargestellten Ausführungsbeispiel ist die Betonplatte 10 mit zwei Hauptbewehrungen, nämlich mit einer Längsbewehrung 34 und einer Querbewehrung 35, versehen, die wie bei dem in Fig. 1 bis 4 dargestellten Ausführungsbeispiel von Spanngliedern gebildet werden. Die Längsbewehrung 34 und die Querbewehrung 35 sind in zwei einander kreuzenden Ebenen 30 und 36 übereinander angeordnet, die in Fig. 5 in strichpunktierten Linien angedeutet sind. In den gleichen Ebenen 30 und 36 befinden sich zwei Lagen 37 und 38 von ersten und zweiten Heizrohrregistern, von denen die erste Lage 37 in der Ebene der Querbewehrung 35 und die zweite Lage 38 in der Ebene der Längsbewehrung 34 angeordnet ist. Jede der beiden Lagen 37 und 38 besteht aus einem ersten und einem zweiten Heizrohrregister, die gegenläufig von Heizmedium durchströmt werden und die an Vorlaufverteilerrohre und Rücklaufsammelrohre angeschlossen sind, die sich jeweils in der Ebene der Heizrohrregister der anderen Lage befinden, wobei sie parallel zu den Heizrohren dieser Register verlaufen und zwischen diesen im Beton eingebettet sind.

In Fig. 6 erkennt man, daß sowohl die Spannglieder 11 der Hauptbewehrung als auch die Heizrohre 24 und 25 der ersten und zweiten Heizrohrregister beim Einbringen des Frischbetons der Betonplatte 10 von der gleichen Stützkonstruktion 39 getragen werden. Diese Stützkonstruktion besteht aus rechteckigen Böcken 40 aus Rundstahl, wie sie zum Abstützen der Bewehrung in Stahlbetonbauwerken üblicherweise verwendet werden. Hierbei sind die Böcke 40 von mindestens zwei seitlich neben einem Spannglied 11 angeordneten Heizrohren 24 und 25 durch einen Tragstab 41 aus Rundstahl miteinander verbunden, der etwas tiefer angeordnet ist als die die Rohre 24 und 25 tragenden Traversen 42 der Böcke 40, so daß die Längsachse 43 des Spanngliedes 11 auf der gleichen Höhe liegt wie die Längsachsen 44 und 45 der Heizrohre 24 und 25 und somit die Spannglieder 11 und die Heizrohre 24 und 25 der Heizrohrregister in der gleichen Ebene 30 liegen, die bei zentrischer Vorspannung die Mittelebene der Betonplatte 10 ist. Die Tragstäbe 41, welche die Böcke 40 miteinander verbinden und ein Auflager für die Spannglieder 11 bilden, können an den Böcken 40 nur mit Bindedraht befestigt sein, aber auch auf in die Böcke eingebogenen Absätzen aufliegen, um beim Betonieren der Betonplatte 10 die exakte Höhenlage und genaue gegenseitige Zuordnung von Heizrohren 24 und 25 und Bewehrung 11 zu gewährleisten.

Versorgungsgänge könnten auf beiden Längsseiten der Betonplatte angeordnet sein, wenn es wünschenswert ist, bei sehr breiten Platten die Zufuhr von Heizmedium zu den Heizrohrregistern auf zwei Längsseiten zu verteilen, oder wenn die eine Seite der Platte stärkeren Temperaturschwankungen ausgesetzt ist als die andere. Dies ist beispielsweise bei Flugzeughallen dann der Fall, wenn die Tore auf einer Seite der Halle zum Ein- oder Ausfahren eines Flugzeuges geöffnet werden und von dieser Seite her Kaltluft in die Halle strömt. Es ist dann zweckmäßig, den in der Nähe der Tore liegenden Teil der Platte stärker zu beheizen, um rasch wieder einen Wärmeausgleich in der Halle herzustellen, was über zwei Wärmekreisläufe für die Platte mit einer geeigneten Regelung leicht erreicht werden kann. Ferner ist es natürlich möglich, die Heizrohre der Heizregister in engerem Abstand voneinander anzuordnen und anstelle von zwei Vorlaufleitungen und zwei Rücklaufleitungen im Versorgungsgang nur eine Vorlaufleitung und eine Rücklaufleitung vorzusehen, an die sowohl die ersten als auch die zweiten Heizrohrregister angeschlossen sind, wie dies z.B. in Fig. 2 angedeutet wurde. Man erkennt auch, daß die Flächenheizung nach der Erfindung nicht nur für große Bodenplatten von Hallen und anderen Hochbauten, sondern auch für Betonstraßen und Fahrbahnplatten von Brücken verwendet werden kann, die im Winter beheizt werden müssen, damit sich kein Eis auf ihnen bilden kann.

## Patentansprüche

1. Große Betonplatte mit einer Flächenheizung mit im Inneren der Platte angeordneten Heizrohren, die von einem Heizmedium durchströmt werden und zu einem ersten Heizrohrregister (21) und einem zweiten Heizrohrregister (22) mit mehreren Heizrohren (24 bzw. 25) zusammengefaßt sind, die an ihrem einen Ende (24a bzw. 25a) an ein Vorlaufverteilerrohr (26 bzw. 28) und an ihrem anderen Ende (24b bzw. 25b) an ein Rücklaufsammelrohr (27 bzw. 29) angeschlossen sind und wobei die einzelnen Heizrohre (24, 25) der beiden Register (21, 22) miteinander abwechselnd in der gleichen Fläche (30) nebeneinanderliegen und die Heizrohre (24) des ersten Registers (21) alle in einer Richtung und die Heizrohre (25) des zweiten Registers (22) alle in der entgegengesetzten Richtung durchströmt werden, **dadurch gekennzeichnet,** daß die Heizrohre (24, 25) in der gleichen, vorzugsweise ebenen Fläche (30) angeordnet sind wie eine Hauptbewehrung (11 bzw. 34 bzw. 35) der Betonplatte (10) und daß die Heizrohre (24, 25) parallel zu den Bewehrungseinlagen (11) verlaufen.

2. Betonplatte nach Anspruch 1, **dadurch gekennzeichnet,** daß zwei Lagen (37 und 38) von ersten und zweiten Heizrohrregistern (21 und 22) vorgesehen sind, von denen die erste Lage (38) in der Ebene (36) einer Längsbewehrung (34) und von denen die zweite Lage (37) in der Ebene einer Querbewehrung (35) angeordnet ist.

3. Betonplatte nach Anspruch 1 oder 2, **dadurch gekennzeichnet,** daß die Vorlaufverteilerrohre (26, 28) und die Rücklaufsammelrohre (27, 29) der Heizrohrregister (21, 22) unterhalb oder oberhalb der vorzugsweise ebenen Fläche (30) angeordnet sind, in der sich die Heizrohre (24, 25) befinden.

4. Betonplatte nach einem der Ansprüche 1 bis 3, **dadurch gekennzeichnet,** daß die Vorlaufverteilerrohre (26, 28) und die Rücklaufsammelrohre (27, 29) der Heizrohrregister (21, 22) quer unter oder über einer Hauptbewehrung (34 bzw. 35) verlaufen, die in der gleichen Ebene (36) liegt wie die Heizrohre (24, 25) der Register (21, 22).

5. Betonplatte nach einem der Ansprüche 1 bis 4, **dadurch gekennzeichnet,** daß die Vorlaufverteilerrohre (26, 28) und die Rücklaufsammelrohre (27, 29) unterhalb der Betonplatte (10) in Versorgungskanälen (31) angeordnet sind.

6. Betonplatte nach einem der Ansprüche 1 bis 5, **dadurch gekennzeichnet,** daß die Heizrohrregister (21, 22) und die in der gleichen Ebene (30) wie diese angeordnete Hauptbewehrung (11) von einer gemeinsamen Stützkonstruktion (39) im Frischbeton der Betonplatte (10) abgestützt sind.

## Claims

1. Large concrete slab comprising a radiant heating system with heating tubes arranged inside the slab, wherein said heating tubes carry a heating fluid and are combined into a first heating tube register (21) and a second heating tube register (22) with several heating tubes (24 or 25, respectively), each of which are connected to a supply header (26 or 28, respectively) at one of their ends (24a or 25a, respectively) and to a return header (27 or 29) at their other end (24b or 25b, respectively), and wherein the individual heating tubes (24, 25) of the two registers (21, 22) are alternately arranged next to one another in the same plane (30) and the heating fluid passes all heating tubes (24) of the first register (21) in one direction and all heating tubes (25) of the second register (22) in the opposite direction, **characterized** in that the heating tubes (24, 25) are arranged in the one, preferably level plane (30) with a main reinforcement (11 or 34 or 35, respectively) of the concrete slab (10), and that the heating tubes (24, 25) run parallel with the reinforcement members (11).

2. Concrete slab as set forth in claim 1, **characterized** in that there are provided two layers (37 and 38) of first and second heating tube registers (21 and 22), the first layer (38) of which is arranged in one plane (36) with a longitudinal heating member (34), while the second layer (37) is arranged in one plane with a transverse reinforcement member (35).

3. Concrete slab as set forth in claim 1 or 2, **characterized** in that the supply headers (26, 28) and the return headers (27, 29) of the heating tube registers (21, 22) are arranged above and below the preferably level plane (30) in which the heating tubes (24, 25) are located.

4. Concrete slab as set forth in any of claims 1 through 3, **characterized** in that the supply headers (26, 28) and return headers (27, 29) of the heating tube registers (21, 22) run in a transverse direction below or above a main reinforcement member (34 or 35, respectively) which is arranged in the same plane (36) as the heating tubes (24, 25) of the registers (21, 22).

5. Concrete slab as set forth in any of claims 1 through 4, **characterized** in that the supply headers (26, 28) and return headers (27, 29) are routed in utility ducts (31) below the concrete slab (10).

6. Concrete slab as set forth in any of claims 1 through 5, **characterized** in that the heating tube registers (21, 22) and the main reinforcement member system (11) located in the same plane (30) as the former are both supported in the fresh concrete of the concrete slab (10) by a common support structure (39).

## Revendications

1. Dalle en béton de grande dimension avec chauffage par surface, pourvue de tuyaux de chauffage, à l'intérieur de la dalle, parcourus par un fluide de chauffage et regroupés en un premier ensemble de tuyaux de chauffage (21) et en un deuxième ensemble de tuyaux de chauffage (22) comprenant plusieurs tuyaux de chauffage (24 resp. 25), qui sont raccordés à l'une de leurs extrémités (24a resp. 25a) à un tuyau distributeur d'aller (26 resp. 28) et, à leur autre extrémité (24b resp. 25b), à un tuyau collecteur de retour (27 resp. 29), les différents tuyaux de chauffage (24, 25) des deux ensembles (21, 22) étant situés les uns à côté des autres en alternance dans la même surface (30), les tuyaux de chauffage (24) du premier ensemble (21) étant tous parcourus dans un sens, et les tuyaux de chauffage (25) du deuxième ensemble (22) étant tous parcourus dans le sens inverse, caractérisée en cc que les tuyaux de chauffage (24, 25) sont disposés dans la même surface (30), de préférence plane qu'une armature principale (11 ou 34 et 35) de la dalle en béton (10), et en ce que les tuyaux de chauffage (24, 25) s'étendent de façon parallèle aux éléments constitutifs de l'armature (11).

2. Dalle en béton selon la revendication 1, caractérisée en ce que deux nappes (37 et 38) de premier et de deuxième ensembles de tuyaux de chauffage (21 et 22) sont prévues, dont la première nappe (38) s'étend dans le plan (36) d'une armature longitudinale (34), et l'autre nappe (37) s'étend dans le plan d'une armature transversale (35).

3. Dalle en béton selon la revendication 1 ou 2, caractérisée en ce que les tuyaux distributeurs d'aller (26, 28) et les tuyaux collecteurs de retour (27, 29) des ensembles de tuyaux (21, 22) sont disposés en-dessous ou en-dessus de la surface (30), de préférence plane, dans laquelle se situent les tuyaux de chauffage (24, 25).

4. Dalle en béton selon l'une des revendications 1 à 3, caractérisée en ce que les tuyaux distributeurs d'aller (26, 28) et les tuyaux collecteurs de retour (27, 29) des ensembles de tuyaux (21, 22) s'étendent transversalement au-dessous ou au-dessus d'une armature principale (34 resp. 35), située dans le même plan (36) que les tuyaux (24, 25) des ensembles (21, 22).

5. Dalle en béton selon l'une des revendications 1 à 4, caractérisée en ce que les tuyaux distributeurs d'aller (26, 28) et les tuyaux collecteurs de retour (27, 29) sont disposés sous la dalle en béton (10) dans des canaux d'alimentation (31).

6. Dalle en béton selon l'une des revendications 1 à 5, caractérisée en ce que les ensembles de tuyaux de chauffage (21, 22) et l'armature principale (11) disposée dans le même plan (30) que ceux-ci sont portés par une structure de soutien (39) commune aux deux dans le béton frais de la dalle en béton (10).
